# EUROPÄISCHE PATENTSCHRIFT

(11) **EP 2 995 584 B1**
(45) Veröffentlichungstag und Bekanntmachung des Hinweises auf die Patenterteilung: **18.07.2018**
(21) Anmeldenummer: 15165534.7
(22) Anmeldetag: 28.04.2015
(51) Int. Cl.: B66F 9/06, B62B 3/06

(54) **TRANSPORTVORRICHTUNG UND VERWENDUNG**
HANDLING DEVICE AND USE OF IT
DISPOSITIF DE TRANSPORT ET UTILISATION

(30) Priorität: 29.04.2014 DE 102014106033
(43) Veröffentlichungstag der Anmeldung: 16.03.2016
(73) Patentinhaber: Pester Pac Automation GmbH, 87787 Wolfertschwenden (DE)
(72) Erfinder: Haug, Hans, 87730 Bad Grönenbach (DE)
(74) Vertreter: Hutzelmann, Gerhard

(56) Entgegenhaltungen:
- WO-A2-2009/043474
- DE-A1-102011 100 281
- DE-U1-202011 000 692
- US-A1- 2007 288 123
- US-A1- 2008 199 292
- US-A1- 2014 228 999

## Beschreibung

Die Erfindung bezieht sich auf eine Transportvorrichtung für Lasten, insbesondere für einen eine Last aufnehmenden Ladungsträger, mit einem Antrieb zum Lenken und Fahren, einem Steuergerät und einer Stromversorgung, wobei ein Trägerteil zur Aufnahme der Last vorgesehen ist, wobei wiederum innerhalb des durch das Trägerteil definierten Raumes der Antrieb, Steuergerät und Stromversorgung angeordnet sind.

Es sind verschiedenartige Transportvorrichtungen dieses Typs bekannt, die jedoch alle den Nachteil aufweisen, nur auf vorgegebenen Bahnen bewegt werden zu können, wobei diese Bahnen beispielsweise durch Schienen, Markierungen oder dergleichen vorgegeben sind. Dokument WO 2009 043474 beschreibt eine Transportvorrichtung für Ladungsträger, beispielsweise Paletten, die ihrer Dimension so ausgestaltet ist dass sie das Lichtraumprofil der Ladungsträger unterfahren kann. Der vorliegenden Erfindung liegt die Aufgabe zugrunde, eine universell einsetzbare Transportvorrichtung vorzuschlagen, die vor allem im Umfeld von Verpackungsmaschinen flexibel einsetzbar ist.

Diese Aufgabe wird erfindungsgemäß dadurch gelöst, daß die Transportvorrichtung mindestens zwei voneinander beabstandete Achsen mit jeweils mindestens zwei angetriebenen Rädern, wobei die Achsen um eine Hochachse drehbar gelagert sind und jeweils mindestens eine Antriebseinheit für jedes angetriebene Rad aufweisen.

Hierdurch ist die Transportvorrichtung lenkbar. In Verbindung mit dem Steuergerät lässt sich eine autonome oder wenigstens teilautonome Steuerung des Fahrtweges realisieren.

Dabei hat es sich als sehr vorteilhaft erwiesen, wenn die Transportvorrichtung mindestens paarweise eingesetzt wird.

Dadurch lassen sich auf einfache Art und Weise Paletten oder dergleichen transportieren.

Eine weitere sehr vorteilhafte Ausgestaltung der Erfindung liegt auch dann vor, wenn eine Hubvorrichtung vorgesehen ist, die das Trägerteil und die Last anzuheben vermag.

Damit können selbsttätig Lasten aufgenommen werden.

Dabei hat es sich als sehr vorteilhaft erwiesen, wenn zwischen dem Trägerteil und jeweils einer Achse eine durch von den Rädern durch Verdrehen der Achse um die Hochachse angetriebene Einrichtung zum Heben und Senken des Trägerteils vorgesehen ist, wobei hierbei eine Kupplung oder ein wenigstens begrenzt wirkender Freilauf vorgesehen sein kann.

Hierdurch kann auf einfache Art und Weise auch eine große Last angehoben werden. Durch ein unabhängiges Arbeiten der einzelnen Achsen kann die Last auch ausnivelliert werden.

Äußerst vorteilhaft ist es gemäß einer weiteren Fortbildung der Erfindung auch, wenn wenigstens eine Sicherheitseinrichtung zur Verhinderung von Kollisionen mit Gegenständen oder Personen vorgesehen ist.

Dadurch lassen sich Unfälle und vor allem Verletzungen von Mitarbeitern verhindern. Es ist auch denkbar, daß die Transporteinrichtung Hindernissen selbsttätig ausweicht.

Sehr vorteilhaft ist es auch, wenn eine Ladevorrichtung zur Aufladung der Stromversorgung vorgesehen ist.

Hiermit wird ein fortwährender Einsatz ermöglicht. So kann beispielsweise bei Stopps die Stromversorgung aufgeladen werden.

Erfindungsgemäß ist es auch äußerst vorteilhaft, wenn Sensoren, Aktoren und Kommunikationsmittel vorgesehen sind.

Durch Sensoren kann die Umgebung erkannt werden. So ist ein quasi autonomer Fahrbetrieb möglich. Durch die Aktoren können Betriebszustände erreicht werden. Mit Hilde der Kommunikationsmittel kann an eine Zentrale oder andere Transportvorrichtungen Informationen übertragen bzw. von diesen empfangen werden.

Eine erfindungsgemäß sehr vorteilhafte Verwendung der Transportvorrichtung liegt vor, wenn die Transportvorrichtung innerhalb und/oder zwischen Verpackungsmaschinen und/oder Palettierern vorgesehen ist.

Gerade innerhalb von Verpackungsmaschinen, dort zur Zu- und Abführung von Material und fertigen Verpackungen ist eine flexible Transportlösung äußerst vorteilhaft.

Dabei ist es sehr vorteilhaft, wenn die Transportvorrichtung für einen Palettierer mit wenigstens einem Palettenplatz, insbesondere für einen Mehrplatz-Palettierer mit wenigstens zwei Palettenplätzen vorgesehen ist.

Gerade bei Palettierern mussten bislang erhebliche Maßnahmen zum Schutz von Mitarbeitern getroffen werden. Durch die Verwendung der erfindungsgemäßen Transporteinrichtung können diese Maßnahmen weitgehend eingespart werden, da die Zu- und Abfuhr von Paletten und damit Material bzw. Verpackungen automatisiert erfolgt. Ein Mitarbeiterzugriff ist nicht mehr notwendig.

Äußerst vorteilhaft ist es dabei, wenn leere und volle Paletten wahlweise längs oder quer an- bzw. abtransportiert werden, wobei entweder eine Transportvorrichtung oder aber für jeden Palettenplatz eine eigene Transportvorrichtung vorgesehen werden kann.

Hierdurch kann auf nochmals kleinerem Raum eine größere Anzahl von Paletten angeordnet werden, zumal die Zu- und Abfuhr in jeder beliebigen Richtung erfolgen kann. Es ist nicht mehr notwendig, bestimmte Wege einzuhalten.

Es hat sich erfindungsgemäß als sehr vorteilhaft erwiesen, wenn ein Vier- oder Mehrplatzpalettierer mit wenigstens zwei in Reihe hintereinander angeordneten Palettenplätzen vorgesehen ist, bei dem die einzelnen Paletten mit der Transportvorrichtung zur Verfügung gestellt und wieder abgeholt werden.

So lassen sich die beiden vorderen Paletten seitlich wegfahren, wohingegen die beiden hinteren Paletten direkt nachrücken können. Durch eine solche Anordnung können auch die Wechselzeiten deutlich reduziert werden.

Eine weitere sehr vorteilhafte Ausgestaltung der Erfindung liegt auch vor, wenn ein Drei- oder Mehrplatzpalettierer mit wenigstens drei in Reihe hintereinander angeordneten Palettenplätzen vorgesehen wird, bei dem die einzelnen Paletten mit der Transportvorrichtung einzeln angefahren werden können.

Auch hierdurch kann eine Platz- und Effizienzoptimierung erfolgen.

Gemäß einer weiteren Fortbildung der Erfindung ist es auch sehr vorteilhaft, wenn ein Palettierer mit quer angeordneten Palettenplätzen vorgesehen wird, bei denen die Paletten quer zur Palettenlängsrichtung angeordnet und angefahren werden.

Durch die Möglichkeit, Paletten auch quer zu verfahren ist diese Anordnung erst möglich. Bei entsprechender Ausgestaltung des zu ladenden Gutes kann so auf eine Drehung der Güter verzichtet werden, wodurch die Taktzeiten verkürzt und der Durchsatz erhöht werden können.

Äußerst vorteilhaft ist es erfindungsgemäß auch, wenn die Transportvorrichtung zum Beschicken und Entladen von Palettenmagazinen vorgesehen ist.

Damit lassen sich auch bei Bedarf gestapelte Paletten zur Verfügung stellen.

Im folgenden ist die Erfindung anhand mehrerer Ausführungsbeispiele veranschaulicht.

Dabei zeigen:
- Fig. 1: eine schematische Ansicht einer Transportvorrichtung,
- Fig. 2: eine schematische Palettenanordnung eines Zweiplatz-Palettierers mit einer doppelten Transportvorrichtung,
- Fig. 3: eine schematische Palettenanordnung eines Vierplatz-Palettierers mit vier doppelten Transportvorrichtungen,
- Fig. 4: eine schematische Palettenanordnung eines Dreiplatz-Palettierers mit einer doppelten Transportvorrichtung,
- Fig. 5: eine schematische Palettenanordnung eines Quer-Zweiplatz-Palettierers mit zwei Transportvorrichtungen, und
- Fig. 6: eine schematische Darstellung einer Beschickung bzw. Entladung eines Palettenmagazins.

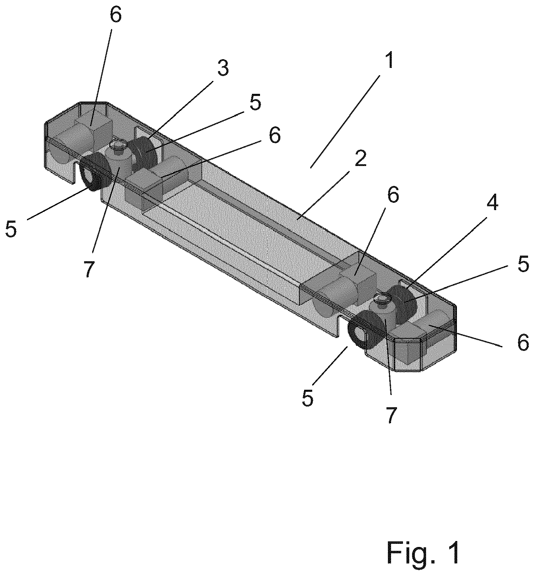

Mit 1 ist in Fig. 1 eine Transportvorrichtung mit einem Trägerteil 2 und zwei Achsen 3 und 4 bezeichnet. Die Achsen 3 und 4 tragen jeweils zwei Räder 5. Die Achsen 3 und 4 sind im Bereich der Enden des Trägerteils 2 angeordnet und sind drehbar um eine vertikale Achse gelagert.

Im Inneren des Trägers ist Raum für eine nicht dargestellte Stromversorgung und einen Steuerungsrechner.

Den Achsen 3 und 4 sind desweiteren noch jeweils zwei Antriebseinheiten 6 zugeordnet, mit denen die Räder 5 angetrieben werden können.

Durch gegenläufigen Antrieb der Räder 5 an einer Achse kann die Achse gedreht werden. Diese Drehung hebt über eine Schraubspindel 7 das Tragteil 2 an bzw. senkt dieses ab. Dabei ist es denkbar, daß eine Kupplung zum Auskuppeln der Schraubspindel 7 oder ein definierter Freilauf vorgesehen ist, um bei Lenkbewegungen der Achsen ein unerwünschtes Verändern der Höhe des Tragteils 2 zu verhindern.

Auch ein Anheben mit Hilfe eines Hydraulikteils oder dergleichen ist denkbar. Ebenso kann die Schraubspindel 7 durch einen separaten Antriebsmotor angetrieben werden, so daß diese von den Rädern 5 und der Achsdrehung unabhängig ist.

An der Transportvorrichtung 1 sind nicht dargestellte Sensoren vorgesehen, welche die Umgebung wenigstens insoweit zu erfassen vermögen, daß Zusammenstöße mit Gegenständen und/oder Personen vermieden werden können.

Es ist denkbar, daß weitere Sensoren, zum Beispiel zur Positionsbestimmung oder dergleichen vorgesehen sind. Ebenso können Aktuatoren für verschiedenste Aufgaben vorgesehen sein.

Eine Kommunikation mit anderen Transportvorrichtungen 1 und/oder einer zentralen Einrichtung ist denkbar.

Eine Ladeeinrichtung für die Stromversorgung ist denkbar, so daß diese bei kurzen Zwischenstopps der Transportvorrichtung 1 nachgeladen werden kann.

Sollen nun Lasten bewegt werden, nachfolgend ist dies am Beispiel von Paletten dargestellt, fahren zwei Transportvorrichtungen 1 unter die Palette 11 ein und heben diese über die Hubvorrichtung, die Spindel 7, an.

Durch Lenkung der Achsen mit Hilfe unterschiedlicher Drehgeschwindigkeiten und/oder Drehrichtungen der Räder einer Achse 3 bzw. 4 wird der Lenkwinkel eingestellt. Die Palette kann weggefahren werden.

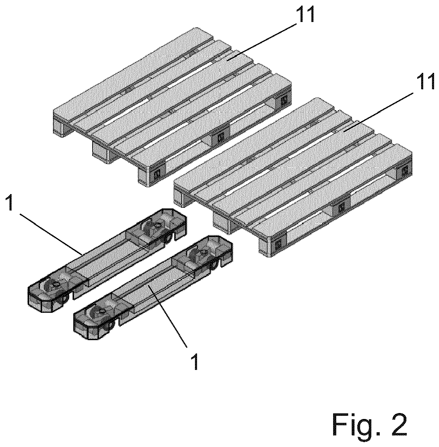

Im vorliegenden, in Fig. 2 dargestellten Ausführungsbeispiel eines Zweiplatz-Palettierers einer Verpackungsmaschine fahren zwei Transportvorrichtungen 1 jeweils unter die aufgestapelte Palette 11 und transportieren diese aus dem Bereich des Palettierers heraus. Ein Bediener braucht nicht in den Bereich des Palettierers hineinzutreten, weswegen keine Sicherheitsmaßnahmen ergriffen werden müssen.

Anschließend, nachdem die Transportvorrichtungen 1 die volle Palette 11 abgestellt haben, wird eine leere Palette an den freien Platz im Palettierer gebracht.

Dies bedeutet eine erhebliche Vereinfachung der Bedienung der Verpackungsmaschine. Der Palettierer kann zudem kompakter gebaut werden, da auch Sicherheitseinrichtungen, wie Kapselungen oder dergleichen völlig verzichtet werden kann.

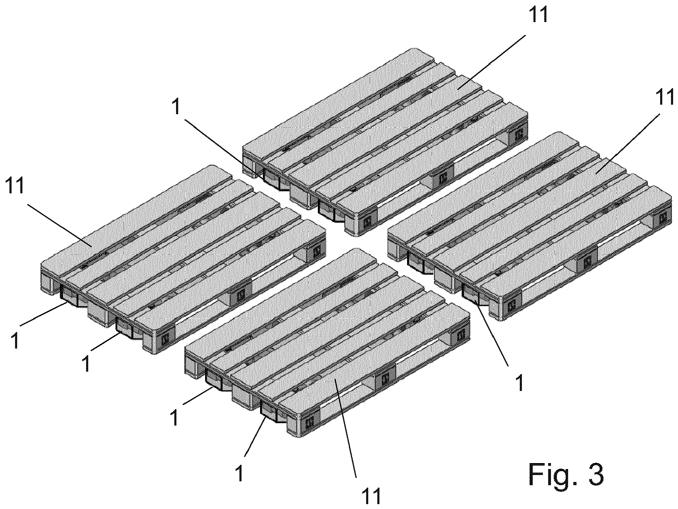

Wie in Fig. 3 dargestellt lassen sich aufgrund der geringen Abmessungen der Transportvorrichtungen 1, die auf die Länge und Breite von Standard-Paletten abgestimmt sind und im eingefahrenen Zustand völlig unter diesen verschwinden, auch Vierplatz-Palettierer konstruieren. Es kann eine zwei plus zwei Anordnung gewählt werden. Eine Möglichkeit ist, daß durch den Palettierer zunächst die beiden vorderen, in der Fig. mit 12 bezeichneten Paletten aufgestapelt werden. Dies kann beispielsweise durch zwei gleichzeitig arbeitende Roboterarme erfolgen.

Sind diese beiden Paletten 12 befüllt, werden diese seitlich, also quer zur Längsrichtung der Transportvorrichtungen 1 herausgefahren und sofort die nächsten beiden Paletten 11 nachgeschoben.

Es ist aber auch denkbar, daß quasi reihum die Paletten aufgestapelt werden. Auch eine gleichzeitige Aufstapelung aller vier Paletten ist denkbar.

Es lassen sich so die Verpackungsprozesse auf höheren Durchsatz hin optimieren. Zudem wird der Platzbedarf geringer, da keine wesentlichen Manövrierflächen mehr gebraucht werden.

Im gezeigten Beispiel ist jeder Palette 11 und 12 jeweils eine doppelte Transportvorrichtung 1 zugeordnet.

In Fig. 3 ist dagegen ein Dreiplatz-Palettierer dargestellt, bei dem drei Paletten hintereinander angeordnet sind.

Hier können beispielsweise die vorderen beiden Paletten gleichzeitig aufgestapelt werden. Sobald diese voll sind, rückt die dritte Palette nach. Es ist aber auch denkbar, daß alle drei Paletten gleichzeitig aufgestapelt werden. Die Paletten können dabei neben oder quer zum Palettierer angeordnet sein.

Jede einzelne Palette in dieser Reihe kann separat herausgefahren und ausgetauscht werden.

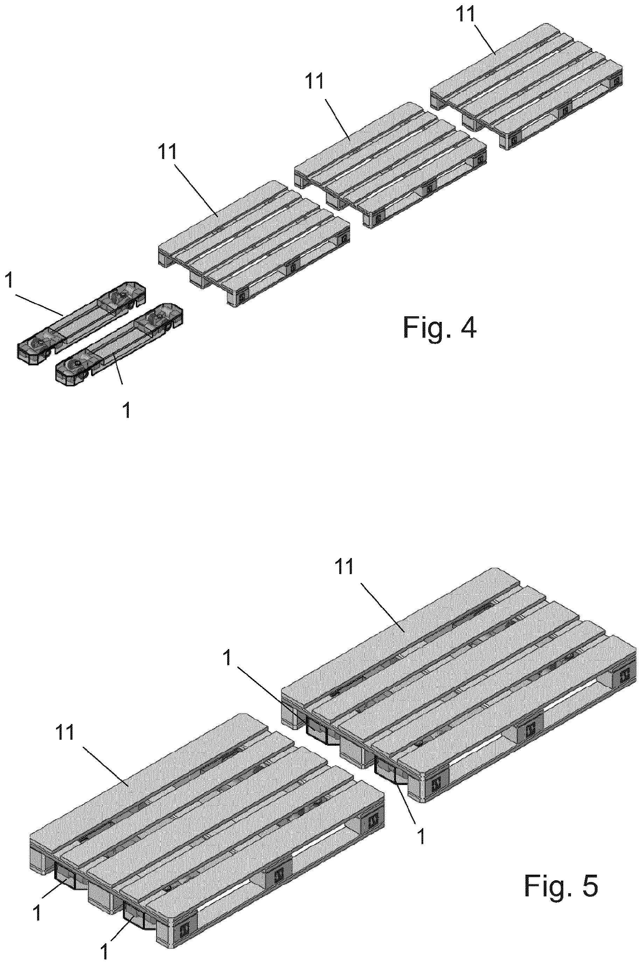

Wie in Fig. 5 angedeutet können die Paletten auch quer an den Palettierer herangefahren werden. Dies ist bislang nur mit aufwendiger Fördertechnik möglich, die jedoch in der Regel mit Schienensystemen arbeiten muss. Diese Schienensysteme sind jedoch in Bereichen mit hohen Hygieneanforderungen nachteilig.

Mit der erfindungsgemäßen Transportvorrichtung 1 werden die jeweiligen Paletten einfach seitlich an den Palettierer herangefahren und werden dann, oftmals ohne aufwendige Drehung der zu stapelnden Gegenstände aufgestapelt.

Bei einer solchen Queranordnung wird nochmals Platz gespart.

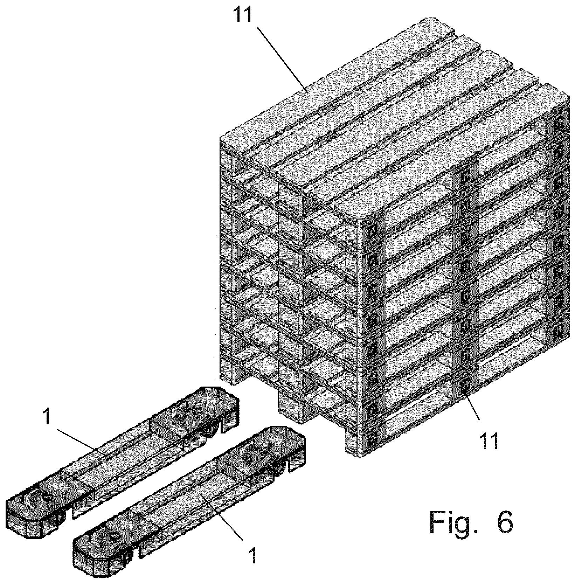

Wie in Fig. 6 angedeutet ist eine weitere Anwendung der Transportvorrichtung auch die Beschickung und Entladung von Palettenmagazinen. Durch die Transportvorrichtung lassen sich solche Magazine aus jeder Richtung platzsparend und effektiv anfahren.

Der Einsatz der Transportvorrichtung ist auch bei Einplatz-Palettierern denkbar.

## Patentansprüche

1. Transportvorrichtung für Lasten, insbesondere für einen eine Last aufnehmenden Ladungsträger, mit einem Antrieb zum Lenken und Fahren, einem Steuergerät und einer Stromversorgung, wobei ein Trägerteil zur Aufnahme der Last vorgesehen ist, wobei wiederum innerhalb des durch das Trägerteil definierten Raumes der Antrieb, Steuergerät und Stromversorgung angeordnet sind, wobei die Transportvorrichtung mindestens zwei voneinander beabstandete Achsen mit jeweils mindestens zwei angetriebenen Rädern, wobei die Achsen um eine Hochachse drehbar gelagert sind und jeweils mindestens eine Antriebseinheit für jedes angetriebene Rad aufweisen, **dadurch gekennzeichnet, daß** Sensoren, Aktoren und Kommunikationsmittel vorgesehen sind und daß eine Hubvorrichtung vorgesehen ist, die das Trägerteil und die Last anzuheben vermag, wobei zwischen dem Trägerteil und jeweils einer Achse eine durch von den Rädern durch Verdrehen der Achse um die Hochachse angetriebene Einrichtung zum Heben und Senken des Trägerteils vorgesehen ist, wobei hierbei eine Kupplung oder ein wenigstens begrenzt wirkender Freilauf vorgesehen ist.

2. Transportvorrichtung nach Anspruch 1, **dadurch gekennzeichnet, daß** die Transportvorrichtung mindestens paarweise eingesetzt wird.

3. Transportvorrichtung nach einem der vorangehenden Ansprüche, **dadurch gekennzeichnet, daß** wenigstens eine Sicherheitseinrichtung zur Verhinderung von Kollisionen mit Gegenständen oder Personen vorgesehen ist.

4. Transportvorrichtung nach einem der vorangehenden Ansprüche, **dadurch gekennzeichnet, daß** eine Ladevorrichtung zur Aufladung der Stromversorgung vorgesehen ist.

5. Verwendung einer Transportvorrichtung nach einem der vorangehenden Ansprüche, **dadurch gekennzeichnet, daß** die Transportvorrichtung innerhalb und/oder zwischen Verpackungsmaschinen und/oder Palettierern vorgesehen ist.

6. Verwendung nach Anspruch 5, **dadurch gekennzeichnet, daß** die Transportvorrichtung für einen Palettierer mit wenigstens einem Palettenplatz, insbesondere für einen Mehrplatz-Palettierer mit wenigstens zwei Palettenplätzen vorgesehen ist.

7. Verwendung nach Anspruch 5 oder 6, **dadurch gekennzeichnet, daß** leere und volle Paletten wahlweise längs oder quer an- bzw. abtransportiert werden, wobei entweder eine Transportvorrichtung oder aber für jeden Palettenplatz eine eigene Transportvorrichtung vorgesehen werden kann.

8. Verwendung nach einem der Ansprüche 5 bis 7, **dadurch gekennzeichnet, daß** ein Vier- oder Mehrplatzpalettierer mit wenigstens zwei in Reihe hintereinander angeordneten Palettenplätzen vorgesehen ist, bei dem die einzelnen Paletten mit der Transportvorrichtung zur Verfügung gestellt und wieder abgeholt werden.

9. Verwendung nach einem der Ansprüche 5 bis 8, **dadurch gekennzeichnet, daß** ein Drei- oder Mehrplatzpalettierer mit wenigstens drei in Reihe hintereinander angeordneten Palettenplätzen vorgesehen wird, bei dem die einzelnen Paletten mit der Transportvorrichtung einzeln angefahren werden können.

10. Verwendung nach einem der Ansprüche 5 bis 9, **dadurch gekennzeichnet, daß** ein Palettierer mit quer angeordneten Palettenplätzen vorgesehen wird, bei denen die Paletten quer zur Palettenlängsrichtung angeordnet und angefahren werden.

11. Verwendung nach einem der Ansprüche 5 bis 10, **dadurch gekennzeichnet, daß** die Transportvorrichtung zum Beschicken und Entladen von Palettenmagazinen vorgesehen ist.

## Claims

1. Transport device for loads, particularly for a load carrier receiving a load, comprising a drive for guiding and moving, control apparatus and a power supply, wherein a support part is provided for reception of the load, wherein the drive, control apparatus and power supply are arranged within the space defined by the support part, wherein the transport device has at least two mutually spaced axles each with at least two driven wheels and wherein the axles are mounted to be rotatable about a high axis and each have at least one drive unit for each driven wheel, **characterised in that** sensors, actuators and communication means are provided and that a stroke device is provided which is capable of lifting the support part and the load, wherein provided between the support part and each axle is a device, which is driven by the wheels through rotation of the axle about the high axis, for raising and lowering the support part, wherein **in that** case a clutch or a freewheel having at least limited action is provided.

2. Transport device according to claim 1, **characterised in that** the transport device is used at least pairwise.

3. Transport device according to any one of the preceding claims, **characterised in that** at least one safety device for prevention of collisions with objects or persons is provided.

4. Transport device according to any one of the preceding claims, **characterised in that** a charging device for charging the current supply is provided.

5. Use of a transport device according to any one of the preceding claims, **characterised in that** the transport device is provided within and/or between packaging machines and/or pallets.

6. Use according to claim 5, **characterised in that** the transport device is provided for a palletting machine with at least one pallet place, particularly for a multi-place palletting machine with at least two pallet places.

7. Use according to claim 5 or 6, **characterised in that** empty and full pallets are selectably transported up and away longitudinally or transversely, wherein either one transport device or, however, an individual transport device for each pallet place can be provided.

8. Use according to any one of claims 5 to 7, **characterised in that** a four-place or multi-place palletting machine with at least two pallet places arranged one behind the other in a row is provided, in which the individual pallets are made available and picked up again by the transport device.

9. Use according to any one of claims 5 to 8, **characterised in that** a three-place or multi-place palletting machine with at least three pallet places arranged in a row one behind the other is provided, in which the individual pallets can be individually moved up by the transport device.

10. Use according to any one of claims 5 to 9, **characterised in that** a palletting machine with transversely arranged pallet places is provided, in which the pallets are arranged and moved up transversely to the pallet longitudinal direction.

11. Use according to any one of claims 5 to 10, **characterised in that** the transport device is provided for loading and unloading pallet magazines.

## Revendications

1. Dispositif de transport pour des charges, en particulier pour un support de charge recevant une charge, avec un entraînement de direction et de déplacement, un appareil de commande et une alimentation électrique, sachant qu'un élément porteur est prévu pour recevoir la charge, sachant à nouveau que l'entraînement, l'appareil de commande et l'alimentation électrique sont disposés à l'intérieur de l'espace défini par l'élément porteur, sachant que le dispositif de transport présente au moins deux essieux mutuellement distants et équipés chacun d'au moins deux roues motrices, sachant que les essieux sont montés à rotation autour d'un axe vertical et présentent chacun au moins une unité d'entraînement pour chaque roue motrice, **caractérisé en ce qu'**il est prévu des capteurs, des actionneurs et des moyens de communication, et **en ce qu'**il est prévu un dispositif de levage qui permet de soulever l'élément porteur et la charge, sachant qu'un organe est prévu entre l'élément porteur et un essieu respectif, organe qui est entraîné par les roues par rotation de l'essieu autour de l'axe vertical et qui est destiné à lever et abaisser l'élément porteur, sachant qu'un accouplement ou un mécanisme à roue libre agissant au moins de manière limitée est ici prévu.

2. Dispositif de transport selon la revendication 1, **caractérisé en ce que** le dispositif de transport est utilisé au moins par paires.

3. Dispositif de transport selon l'une des revendications précédentes, **caractérisé en ce qu'**il est prévu au moins un organe de sécurité pour empêcher des collisions avec des objets ou des personnes.

4. Dispositif de transport selon l'une des revendications précédentes, **caractérisé en ce qu'**il est prévu un dispositif de charge pour recharger l'alimentation électrique.

5. Utilisation d'un dispositif de transport selon l'une des revendications précédentes, **caractérisée en ce que** le dispositif de transport est prévu à l'intérieur de machines d'emballage et/ou de palettiseurs, et/ou entre des machines d'emballage et/ou des palettiseurs.

6. Utilisation selon la revendication 5, **caractérisée en ce que** le dispositif de transport est prévu pour un palettiseur doté d'au moins un emplacement de palette, en particulier pour un palettiseur à plusieurs emplacements doté d'au moins deux emplacements de palettes.

7. Utilisation selon la revendication 5 ou 6, **caractérisée en ce que** des palettes vides et des palettes pleines sont sélectivement apportées ou évacuées longitudinalement ou transversalement, sachant qu'il peut être prévu soit un dispositif de transport, soit un propre dispositif de transport pour chaque emplacement de palette.

8. Utilisation selon l'une des revendications 5 à 7, **caractérisée en ce qu'**il est prévu un palettiseur à quatre emplacements ou davantage doté d'au moins deux emplacements de palettes disposés en rangée l'un derrière l'autre, selon lequel les palettes individuelles sont mises à disposition et récupérées avec le dispositif de transport.

9. Utilisation selon l'une des revendications 5 à 8, **caractérisée en ce qu'**il est prévu un palettiseur à trois emplacements ou davantage doté d'au moins trois emplacements de palettes disposés en rangée les uns derrière les autres, selon lequel les palettes individuelles peuvent être individuellement manoeuvrées avec le dispositif de transport.

10. Utilisation selon l'une des revendications 5 à 9, **caractérisée en ce qu'**il est prévu un palettiseur avec des emplacements de palettes disposés transversalement, selon lesquels les palettes sont disposées et manoeuvrées transversalement à la direction longitudinale des palettes.

11. Utilisation selon l'une des revendications 5 à 10, **caractérisée en ce que** le dispositif de transport est prévu pour le chargement et le déchargement de magasins de palettes.
